# EUROPÄISCHE PATENTSCHRIFT

(11) **EP 4 426 468 B1**
(45) Veröffentlichungstag und Bekanntmachung des Hinweises auf die Patenterteilung: **06.05.2026**
(21) Anmeldenummer: 22801063.3
(22) Anmeldetag: 07.10.2022
(51) Int. Cl.: B01D 46/00, B01D 46/24, B01D 46/64, H01M 8/0662

(54) **RUNDFILTERELEMENT ZUR FILTRATION EINES GASFÖRMIGEN FLUIDS**
ROUND FILTER ELEMENT FOR FILTERING A GASEOUS FLUID
ÉLÉMENT FILTRANT ROND SERVANT À FILTRER UN FLUIDE GAZEUX

(30) Priorität: 04.11.2021 DE 102021128689
(43) Veröffentlichungstag der Anmeldung: 11.09.2024
(73) Patentinhaber: MANN+HUMMEL GmbH, 71636 Ludwigsburg (DE)
(72) Erfinder: SCHMID, Daniel, 74343 Sachsenheim (DE); HETTKAMP, Philipp, 71711 Steinheim (DE); FREISINGER, Jürgen, 71563 Affalterbach (DE); RIEGER, Mario, 71638 Ludwigsburg (DE)
(74) Vertreter: Mann + Hummel Intellectual Property
(86) Internationale Anmeldenummer: PCT/EP2022/077906
(87) Internationale Veröffentlichungsnummer: WO 2023/078636

(56) Entgegenhaltungen:
- WO-A1-2010/074922
- WO-A1-2022/194544
- DE-A1- 102018 215 603
- DE-U1- 202019 002 835

## Beschreibung

### Technisches Gebiet

Die Erfindung bezieht sich auf ein Rundfilterelement zur Filtration eines gasförmigen Fluids mit einem als Hohlkörper ausgebildeten Partikel-Filtermediumkörper zur Partikelfiltration und einem separaten, als Hohlkörper ausgebildeten Schadgas-Filtermediumkörper zur Schadgasfiltration nach dem Oberbegriff des Anspruches 1.

### Stand der Technik

In der DE 10 2018 215 603 A1 wird ein modulares Filterelement beschrieben, das ein erstes, rohluftseitiges Filtermodul und ein zweites, stromab gelegenes Filtermodul aufweist, die jeweils hohlzylindrisch ausgebildet und konzentrisch zueinander angeordnet sind. Das modulare Filterelement kann als Brennstoffzellenluftfilter zur Luftfilterung einer Brennstoffzellenanwendung eingesetzt werden. Am ersten, rohluftseitigen Filtermodul erfolgt eine Abscheidung von Partikeln, wohingegen das zweite Filtermodul ein Adsorptionsmedium aufweist, über das Schadgase getrennt werden. Jedes Filtermodul weist an seinen gegenüberliegenden Stirnseiten eine strömungsdichte Endscheibe auf. Das modulare Filterelement mit den beiden Filtermodulen ist in einem Gehäusetopf aufgenommen, der von einem Gehäusedeckel verschließbar ist.

Kombinierte hohlzylindrische Luftfilterelemente sind aus dem Gebrauchsmuster DE 20 2019 002 835 U1, der Veröffentlichung WO 2010/074922 A1 und der nachveröffentlichten Schrift WO 2022/194544 A1 bekannt.

### Offenbarung der Erfindung

Der Erfindung liegt die Aufgabe zugrunde, ein Rundfilterelement zur Filtration eines gasförmigen Fluids mit zwei in Strömungsrichtung hintereinanderliegenden Filtermediumkörpern in der Weise auszubilden, dass über einen langen Betriebszeitraum eine hohe Filtrationsleistung gewährleistet ist.

Diese Aufgabe wird erfindungsgemäß mit den Merkmalen des Anspruches 1 gelöst. Die Unteransprüche geben zweckmäßige Weiterbildungen an.

Das erfindungsgemäße Rundfilterelement dient zur Filtration eines gasförmigen Fluids, beispielsweise zur Filtration von Luft, und kann zum Beispiel in einer Brennstoffzelle eingesetzt werden. Das Rundfilterelement weist einen Partikel-Filtermediumkörper auf, über den Partikel aus dem gasförmigen Fluid abgeschieden werden und der als Hohlkörper ausgebildet ist. Das Rundfilterelement umfasst des Weiteren einen Schadgas-Filtermediumkörper zur Schadgasfiltration, der ebenfalls als Hohlkörper ausgebildet und konzentrisch zum Partikel-Filtermediumkörper angeordnet ist. Die beiden Filtermediumkörper umschließen einen gemeinsamen, innenliegenden Strömungsraum. Jeder Filtermediumkörper ist an beiden gegenüberliegenden Stirnseiten mit jeweils einer Endscheibe versehen, die den betreffenden Filtermediumkörper stirnseitig strömungsdicht bedeckt.

Die Durchströmung des Rundfilterelements erfolgt entweder radial von innen nach außen oder umgekehrt radial von außen nach innen, wobei der Begriff "radial" sich auf die Längsachse des Rundfilterelements bezieht. Bei einer radialen Durchströmung von innen nach außen wird das ungereinigte Rohfluid zunächst in den innenliegenden Strömungsraum geleitet, von dem aus die radiale Durchströmung der Filtermediumkörper von innen nach außen erfolgt. Bei radialer Durchströmung von außen nach innen wird das gereinigte Fluid im innenliegenden Strömungsraum gesammelt und aus diesem axial abgeleitet.

Die Filtermediumkörper weisen beispielsweise Hohlzylinderform oder eine konische Form auf. Die Filtermediumkörper können über ihre axiale Länge - bezogen auf die Längsachse des Rundfilterelements - entweder eine konstante Querschnittsfläche oder eine sich ändernde Querschnittsfläche aufweisen, beispielsweise eine konstant ansteigende Querschnittsfläche. In einer Ebene senkrecht zur Längsachse können die Filtermediumkörper eine kreisförmige, ovale, oder eine langgestreckte Querschnittsform, zum Beispiel stadionförmig mit halbkreisförmigen Schmalseiten und geradflächigen Längsseiten, wobei die Längsseiten gegebenenfalls auch konvex oder konkav ausgebildet sein können, aufweisen.

Jeder Filtermediumkörper weist seine eigenen Endscheiben auf, die Endscheiben der beiden Filtermediumkörper sind nicht einstückig. Um Fehlluftströme zwischen den Filtermediumkörpern zu vermeiden, ist mit einer Endscheibe ein strömungsdichtes, separat ausgebildetes Verbindungselement verbunden, das eine Endscheibe des benachbarten Filtermediumkörpers umgreift und auf diese Weise eine strömungsdichte Verbindung mit der Endscheibe des benachbarten Filtermediumkörpers herstellt. Außerdem wird über das Verbindungselement die Relativposition der beiden Filtermediumkörper zueinander fixiert.

Das Verbindungselement stellt kein Gehäusebauteil dar, sondern ist Bestandteil des Rundfilterelements und bildet gemeinsam mit den beiden Filtermediumkörpern eine bauliche Einheit. Das Rundfilterelement einschließlich des Verbindungselements kann in ein Filtergehäuse eingesetzt werden, wobei Filtergehäuse und Rundfilterelement eine Filtereinrichtung bilden.

Das Verbindungselement ist beispielsweise als ein Kunststoffbauteil ausgeführt. Indem das Verbindungselement den Abstand zwischen den Filtermediumkörpern im Bereich der Endscheiben überbrückt, ist der Ringraum, welcher sich zwischen den Filtermediumkörpern befindet, strömungsdicht abgeschlossen, so dass Fehlluftströme zwischen Roh- und Reinseite verhindert werden.

Das Verbindungselement ist ringförmig ausgebildet. Das Verbindungselement ist separat von den Endscheiben der Filtermediumkörper ausgebildet, jedoch fest mit einer Endscheibe verbunden. Dies erfolgt beispielsweise dadurch, dass die Endscheibe als ein Gussteil aus einem vorzugsweise weichelastischen Material ausgebildet ist, welches an die Stirnseite des Filtermediumkörpers angegossen wird, wobei zugleich ein Abschnitt des Verbindungselements in das Endscheibenmaterial hineinragt und beim Aushärten eine feste Verbindung zwischen Endscheibe und Verbindungselement geschaffen wird. Als Endscheibenmaterial kommt beispielsweise Polyurethan oder Kunststoff in Betracht.

Gemäß einer vorteilhaften Ausführung ragt ein Abschnitt des Verbindungselements in den Zwischenraum zwischen den beiden Filtermediumkörpern hinein und liegt seitlich an der Endscheibe des benachbarten Filtermediumkörpers an. Dieser Abschnitt des Verbindungselements sorgt zum einen für einen konstanten radialen Relativabstand zwischen den beiden Filtermediumkörpern. Zum andern ermöglicht dieser Abschnitt eine dichtende Verbindung mit der Endscheibe des benachbarten Filtermediumkörpers, indem beispielsweise diese Endscheibe unmittelbar auf Kontakt zu dem Abschnitt des Verbindungselementes anliegt. Dies stellt sicher, dass aus dem Zwischenraum zwischen den beiden Filtermediumkörpern kein Fehlluftstrom in Achsrichtung entweichen kann, sondern das Fluid gezwungen ist, den zweiten Filtermediumkörper in Radialrichtung zu durchströmen.

Gemäß noch einer weiteren vorteilhaften Ausführung liegt ein Abschnitt des Verbindungselements auf der dem haltenden Filtermediumkörper abgewandten Seite seitlich an der Endscheibe des benachbarten Filtermediumkörpers an. Auch an diesem Abschnitt des Verbindungselements besteht eine zusätzliche Dichtstelle, indem die Endscheibe des benachbarten Filtermediumkörpers auf Kontakt zu dem Verbindungselementabschnitt liegt. Ein weiterer Kontakt kann axial zwischen der Endscheibe des benachbarten Filtermediumkörpers und dem übergreifenden Teil des Verbindungselementes bestehen. Auf diese Weise können insgesamt bis zu drei Dichtstellen zwischen der Endscheibe des benachbarten, das Verbindungselement nicht tragenden Filtermediumkörpers und dem Verbindungselement geschaffen werden: Zum einen über den zwischen den beiden Filtermediumkörpern hineinragenden Abschnitt des Verbindungselements und der Endscheibe, was eine Dichtung in Radialrichtung darstellt, zum andern zwischen dem außenliegenden Abschnitt des Verbindungselements und der Endscheibe, was ebenfalls eine radiale Dichtung darstellt, und schließlich axial zwischen der Endscheibe und dem übergreifenden Teil des Verbindungselements, was eine axiale Dichtung darstellt. Hierdurch sind ein Toleranzausgleich und eine zuverlässige Abdichtung ermöglicht.

Vorteilhaft ist es außerdem, dass die beiden seitlichen Abschnitte des Verbindungselements einen Aufnahmeraum für die Endscheibe des nicht-haltenden Filtermediumkörpers bilden, so dass dieser Filtermediumkörper einschließlich seiner Endscheibe in die Aufnahme am Verbindungselement hineingeschoben werden kann, wodurch sogleich die dichtende Verbindung hergestellt wird. Hierdurch ist ein einfacher Zusammenbau des Rundfilterelements möglich.

Gemäß noch einer weiteren vorteilhaften Ausführung ist ein weiterer Abschnitt des Verbindungselementes Träger eines Dichtungselements, das sich an einem Gehäuseteil abstützen kann. Das Dichtungselement kann in eine Aufnahmenut eingesetzt sein, welche an dem Abschnitt des Verbindungselements gebildet ist, wobei der aus der Aufnahmenut herausragende Teil des Dichtungselements sich an dem Gehäuseteil abstützt und auf diese Weise eine strömungsdichte Verbindung zwischen dem Verbindungselement und dem Gehäuseteil herstellt. Diese Ausführung hat den Vorteil, dass beispielsweise zwischen einem Gehäusetopf und dem Verbindungselement ein strömungsdichter Abschluss hergestellt werden kann, so dass das Fluid auf der Reinseite gezwungen ist, den hierfür vorgesehenen Abströmkanal im Filtergehäuse für die Ableitung zu nehmen. Vorzugsweise ist die Aufnahmenut nach axial unten oder oben offen, sodass das eingesetzte Dichtungselement in axialer Richtung dichtet. Die Dichtung kann zwischen dem Gehäusetopf und einem aufzusetzenden Gehäusedeckel angeordnet werden, sodass der Anpressdruck für die Dichtung durch die Verschlusselemente zur Verbindung der beiden Gehäuseteile aufgebracht wird. Die Verbindung zwischen dem Gehäusetopf und dem aufzusetzenden Gehäusedeckel muss in dieser Ausführung nicht zwingend strömungsdicht ausgeführt sein.

Gemäß einer vorteilhaften Ausführung ist an mindestens einem Filtermediumkörper ein Stützgerüst, insbesondere ein Stützgitter, angeordnet. Das Stützgerüst weist eine Vielzahl an Strömungsöffnungen für das zu reinigende Medium auf und stabilisiert gleichzeitig den Filtermediumkörper. Das Stützgerüst ist vorzugsweise auf der Abströmseite des Schadgas-Filtermediumkörpers und/oder des Partikel-Filtermediumkörpers angeordnet.

Gemäß einer weiteren vorteilhaften Ausführung ist das Verbindungselement mit einem Stützgitter verbunden, das an einer Wandseite eines Filtermediumkörpers angeordnet ist. Das Stützgitter befindet sich vorzugsweise an der außenliegenden Wandseite des radial innen liegenden Filtermediumkörpers, wobei diese Wandseite vorzugsweise zugleich die Abströmseite des Filtermediumkörpers bildet. Das Stützgitter stützt den unmittelbar anliegenden Filtermediumkörper in Radialrichtung ab. Das Stützgitter ist insbesondere mit den axial gegenüberliegenden Endscheiben des Filtermediumkörpers fest verbunden, indem ein Abschnitt des Stützgitters in das Material der jeweiligen Endscheibe hineinragt. Das Stützgitter kann einteilig mit dem Verbindungselement ausgeführt sein, wobei sich das Stützgitter an einer Wandseite des Filtermediumkörpers und das Verbindungselement nach radial außen im Wesentlichen entlang der axialen Stirnseite des benachbarten, radial äußeren Filtermediumkörpers erstreckt.

Gemäß noch einer weiteren vorteilhaften Ausführung ist ein Filtermediumkörper oder sind beide Filtermediumkörper als Filterbalg mit einer Vielzahl von Filterfalten ausgebildet. Alternativ ist es auch möglich, einen oder beide Filtermediumkörper aus einem blockförmigen Material zu fertigen oder aus einem gewickelten Filtermedium.

Gemäß noch einer weiteren vorteilhaften Ausführung ist eine Medienlage, insbesondere eine Vlieslage, an der Wandseite eines Filtermediumkörpers angeordnet. Die Medienlage reduziert die Reibung zwischen dem Filtermediumkörper und einem angrenzenden Bauteil, insbesondere einem Stützgitter, das den betreffenden Filtermediumkörper abstützt. Aufgrund der reduzierten Reibung wird ein Verformen des Filtermediumkörpers im Falle von Relativbewegungen, beispielsweise durch Vibrationen oder Stöße, vermieden.

Die Vlieslage befindet sich entweder zwischen den beiden Filtermediumkörpern und/oder an einer Außenseite eines Filtermediumkörpers, wobei vorteilhafterweise in jedem Fall die Vlieslage zwischen einem Stützgitter und der Wandseite des Filtermediumkörpers angeordnet ist. Vorteilhaft ist eine Vlieslage abströmseitig des Schadgas-Filtermediumkörpers angeordnet, sodass ausgetragene Partikel, beispielsweise Aktivkohlepartikel aus dem Filtermedium, zurückgehalten werden.

Gemäß einer insbesondere bei Filterelementen großer Länge vorteilhaften Ausgestaltung besteht mindestens einer der Filtermediumkörper aus mindestens zwei Teilkörpern, welche in axialer Richtung aneinandergefügt sind. Die Teilkörper können beispielsweise miteinander verklebt sein.

Die Erfindung bezieht sich des Weiteren auf eine Filtereinrichtung mit einem vorbeschriebenen Rundfilterelement und einem Filtergehäuse zur Aufnahme des Rundfilterelements. Die Filtereinrichtung kann in oder an einer Brennstoffzelle verwendet werden, beispielsweise im Zufuhrbereich der Umgebungsluft, die einer Brennstoffzelle zuzuführen ist, um die Umgebungsluft einer Filtration zu unterziehen.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1a: ein schematischer Schnitt durch eine Filtereinrichtung mit einem Rundfilterelement in einem Filtergehäuse,
- Fig. 1b: das Detail Ib aus Fig. 1a in vergrößerter Darstellung,
- Fig. 1c: das Detail Ic aus Fig. 1a in vergrößerter Darstellung,
- Fig. 1d: eine perspektivische Darstellung des Rundfilterelements, teilweise im Schnitt,
- Fig. 2a: eine Fig. 1a entsprechende Darstellung einer Filtereinrichtung mit einem Rundfilterelement in einer weiteren Ausführung,
- Fig. 2b: das Detail IIb aus Fig. 2a in vergrößerter Darstellung,
- Fig. 2c: das Detail IIc aus Fig. 2a in vergrößerter Darstellung,
- Fig. 3a: eine Fig. 1a entsprechende Darstellung einer Filtereinrichtung mit einem Rundfilterelement in noch einer weiteren Ausführung,
- Fig. 3b: das Detail IIIb aus Fig. 3a in vergrößerter Darstellung,
- Fig. 3c: das Detail IIIc aus Fig. 3a in vergrößerter Darstellung.

In den Figuren sind gleiche Bauteile mit gleichen Bezugszeichen versehen.

### Ausführungsform(en) der Erfindung

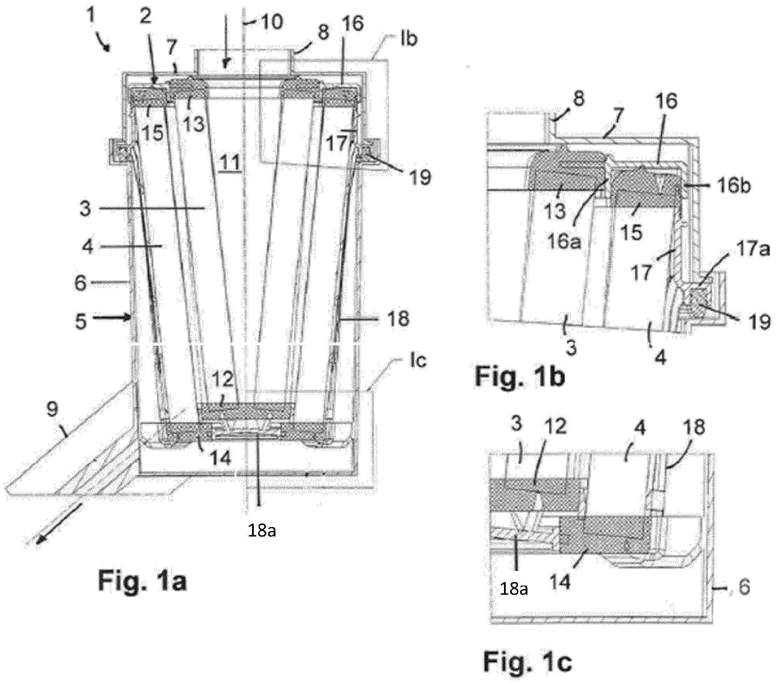

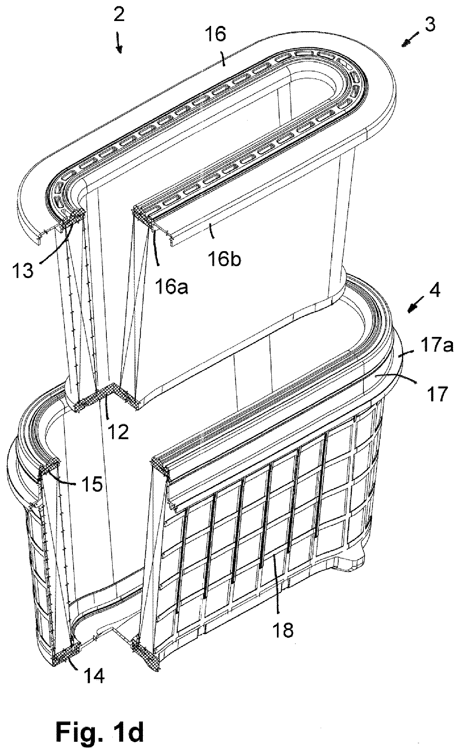

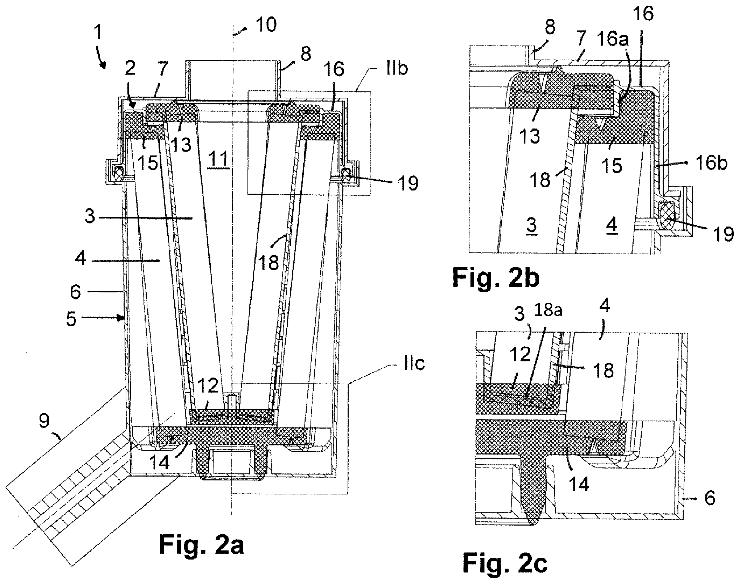

In Fig. 1a bis 1d ist eine Filtereinrichtung 1 mit einem ersten Rundfilterelement 2 zur Filtration eines gasförmigen Fluids dargestellt. Die Filtereinrichtung 1 weist eine Längsachse 10 auf, wobei Fig. 1 - und ebenso Fig. 2 - lediglich die linke Schnitthälfte auf einer Seite der Längsachse 10 darstellt. Die Filtereinrichtung 1 wird beispielsweise zur Filtration der Frischluft verwendet, die einer Brennstoffzelle zugeführt wird.

Das Rundfilterelement 2 weist zwei Filtermediumkörper 3, 4 auf, die als Partikel-Filtermediumkörper 3 zur Filtration von Partikeln und als Schadgas-Filtermediumkörper 4 zur Filtration von Schadgasen wie beispielsweise Schwefeldioxid, Stickoxide oder Ammoniak ausgebildet sind. Die beiden Filtermediumkörper 3, 4 sind vorzugsweise als Filterbalg aus zickzackförmig gefaltetem Filtermedium ausgeführt. Der Schadgas-Filtermediumkörper 4 kann Aktivkohle enthalten, um in der gewünschten Weise die Schadgase zu adsorbieren. Vorzugsweise sind Aktivkohlepartikel in das Filtermedium des Schadgas-Filtermediumkörpers 4 eingebettet. Die Filtermediumkörper 3 und 4 sind beispielsweise konisch ausgeführt und besitzen eine langgestreckte flach-ovale Querschnittsform mit zwei parallelen Längsseiten und zwei konvexen Schmalseiten. Die beiden Filtermediumkörper 3 und 4 sind konzentrisch zueinander angeordnet und umschließen einen innenliegenden Strömungsraum 11, der das ungereinigte Rohfluid aufnimmt und von dem aus die beiden Filtermediumkörper 3 und 4 radial von innen nach außen - bezogen auf die Längsachse 10 - durchströmt werden.

Das Rundfiltelement 2 ist in einem Filtergehäuse 5 aufgenommen, das einen Gehäusetopf 6 und einen Gehäusedeckel 7 umfasst. Am Gehäusedeckel 7 ist ein Einlass 8 angeformt, über den das ungereinigte Rohfluid eingeleitet und dem innenliegenden Strömungsraum 11 zugeführt wird. Am Gehäusetopf 7 ist ein Auslass 9 angeformt, über den das gereinigte Fluid abgeleitet wird, welches sich nach dem Durchströmen der beiden Filtermediumkörper 3 und 4 an der Außenseite des in Strömungsrichtung hinten liegenden, umgreifenden Schadgas-Filtermediumkörpers 4 ansammelt. Die innenliegende Seite des Partikel-Filtermediumkörpers 3 bildet die Roh- oder Anströmseite, die Außenseite des Schadgas-Filtermediumkörpers 4 die Rein- oder Abströmseite.

Jeder Filtermediumkörper 3, 4 ist an beiden axial gegenüberliegenden Stirnseiten mit einer Endscheibe 12, 13 bzw. 14, 15 versehen, welche die betreffende axiale Stirnseite strömungsdicht abdeckt. Die Endscheiben 12 bis 15 können an die Filtermediumkörper angegegossen sein. Die untere Endscheibe 12 des Partikel-Filtermediumkörpers 3, die dem Boden des Gehäusetopfes 6 zugewandt ist, ist als durchgehende Scheibe ausgebildet und weist keine Ausnehmung auf. Dagegen ist die obere Endscheibe 13 des gleichen Partikel-Filtermediumkörpers 3 ringförmig mit einer zentralen Ausnehmung ausgebildet, über die die Rohluft über den Einlass 8 in den innenliegenden Strömungsraum 11 einströmen kann.

Die obere Endscheibe 15 des Schadgas-Filtermediumkörpers 4 ist ebenfalls ringförmig ausgebildet. Die untere Endscheibe 14 des Schadgas-Filtermediumkörpers 4 ist geschlossen ausgeführt, wobei die untere Endscheibe 14 zweiteilig ist mit einem die Stirnseite des Filtermediumkörpers 4 abdeckenden, angeschäumten weichen Kunststoff und mit einer die Öffnung zum Innenraum abdeckenden Kunststoffscheibe, die in das angeschäumte Kunststoffmateiral eingebettet ist. Wie weiter unten ausgeführt wird, kann die Kunststoffscheibe ein Abschnitt 18a eines Stützgitters 18 sein. Alternativ kann die untere Endscheibe 14 einstückig aus einem geschäumten Kunststoff ausgeführt werden.

An der oberen Endscheibe 13 des Partikel-Filtermediumkörpers 3, die dem Gehäusedeckel 7 zugewandt ist, befindet sich ein erstes, strömungsdicht ausgebildetes Verbindungselement 16, das radial nach außen hinausragt und ringförmig umlaufend ausgebildet ist. Ein Abschnitt des Verbindungselementes 16 ist im Material der oberen Endscheibe aufgenommen und auf diese Weise fest mit der Endscheibe 13 verbunden. Das Verbindungselement 16 übergreift die obere Endscheibe 15 des benachbarten, radial weiter außenliegenden Schadgas-Filtermediumkörpers 4, wobei eine strömungsdichte Verbindung zwischen der Endscheibe 15 und dem Verbindungselement 16 hergestellt ist. Ein erster Abschnitt 16a des Verbindungselements 16 ragt von dem sich in Radialrichtung erstreckenden Teil axial nach innen in den Zwischenraum zwischen den beiden Filtermediumkörpern 3, 4. Ein zweiter Abschnitt 16b ragt auf der radial außenliegenden Seite der oberen Endscheibe 15 axial nach unten, so dass die beiden Abschnitte 16a und 16b eine ringförmige Aufnahme für die obere Endscheibe 15 des Schadgas-Filtermediumkörpers 4 bilden, in die die obere Endscheibe 15 einsteckbar ist. Hierbei sind Dichtstellen an der radial innenliegenden Seite und an der radial außenliegenden Seite der Endscheibe 15 mit dem Verbindungselement 16 bzw. den Abschnitten 16a und 16b gebildet. Alternativ oder zusätzlich ist eine Dichtstelle zwischen der axialen Stirnseite der Endscheibe 15 und dem Verbindungselement 16 ausgebildet. Prinzipiell genügt die Ausbildung einer der drei Dichtstellen. Das Verbindungselement 16 ist strömungsdicht ausgebildet, so dass eine strömungsdichte Verbindung mit der oberen Endscheibe 15 sichergestellt ist und Fehlluftströme des im Zwischenraum zwischen den Filtermediumkörpern 3, 4 befindlichen Fluids axial nach außen verhindert werden.

An einer außenliegenden Wand- oder Mantelseite des Schadgas-Filtermediumkörpers 4 ist ein Stützgitter 18 angeordnet. Dieses Stützgitter 18 umgibt den Schadgas-Filtermediumkörper 4 außenseitig und ist endseitig in das Material der Endscheiben 14, 15 eingebettet und so gehalten. Einteilig mit dem Stützgitter 18 ist ein Dichtungsträger 17 verbunden. Dieser ist als umlaufender nach radial außen abstehender Kragen ausgebildet, der eine nach axial unten offene Aufnahmenut 17a für ein Dichtungselement 19 aufweist. Das Dichtungselement 19 kann in Form eines Dichtrings in die Aufnahmenut 17a eingelegt werden. Alternativ kann ein Dichtungselement angespritzt werden. Das Dichtungselement 19 liegt auf einem Absatz des Gehäusetopfes 6 auf und dichtet die Rohseite gegen die Reinseite ab.

Zwischen dem Stützgitter 18, welches eine Vielzahl von Strömungsöffnungen aufweist, und der außenliegenden Mantelseite des Schadgas-Filtermediumkörpers 4 kann sich eine Medienlage, beispielsweise eine Vlieslage, befinden. Diese bildet einen mechanischen Schutz gegen Reibung und hält insbesondere Aktivkohlepartikel, die aus dem Schadgas-Filtermediumkörper 4 austreten können, zurück.

Ein Abschnitt des Stützgitters 18 ist in der unteren Endscheibe 14 radial nach innen als Abschnitt 18a fortgeführt, wobei der Abschnitt 18a radial innerhalb des Filtermediums als geschlossene, strömungsdichte Scheibe ausgebildet ist. An dem Abschnitt 18a stützt sich die untere Endscheibe 12 des Partikel-Filtermediumkörpers 3 axial ab. Wie in Fig. 1c zu erkennen ist, kann der Abschnitt 18a einen ringförmigen Abschnitt aufweisen, welcher sich in axialer Richtung in den Innenraum des Schadgas-Filtermediumkörpers 4 erstreckt. An dieser Rippe stützt sich der innere Partikel-Filtermediumkörper 3 mit der unteren Endscheibe 12 radial ab.

Wenn der innere Partikel-Filtermediumkörper 3 in den äußeren Schadgas-Filtermediumkörper 4 eingesetzt ist, sind die beiden Filtermediumkörper 3, 4 somit über die mindestens eine Dichtstelle zwischen oberer Endscheibe 15 des äußeren Filtermediumkörpers 4 und dem Verbindungselement 16 dicht miteinander verbunden. Zwischen Rundfilterelement 2 und Filtergehäuse 5 ist ebenfalls eine Dichtstelle gebildet. Im Bereich des Rohfluideinlasses 8 stützt sich die obere Endscheibe 13 des inneren Filtermediumkörpers 3 vorzugsweise axial an dem Gehäusedeckel 7 ab ohne abzudichten. Die Dichtstelle zwischen Rohseite und Reinseite befindet sich radial außen und ist durch Anlage des am äußeren Filtermediumkörper 4 gelagerten Dichtungselementes 19 an einem Kragen des Gehäusetopfs 6 als Axialdichtung ausgebildet.

Fig. 1d zeigt eine perspektivische Darstellung des Rundfilterelements 2 mit dem äußeren Schadgas-Filtermediumkörper 4 und dem darin aufgenommenen inneren Partikel-Filtermediumkörper 3. Das Verbindungselement 16, das mit der oberen Endscheibe 13 des inneren Partikel-Filtermediumkörpers 3 verbunden ist, bildet einen radial nach außen hinausragenden Wandabschnitt mit einem inneren, axial nach unten verlaufenden Abschnitt 16a und einem äußeren, ebenfalls axial nach unten verlaufenden Abschnitt 16b, wodurch eine U-förmige Aufnahme zum Umgreifen der oberen Endscheibe 15 des äußeren Schadgas-Filtermediumkörpers 4 gebildet ist.

Mit der oberen Endscheibe 15 des äußeren Schadgas-Filtermediumkörpers 4 ist das Stützgitter 18 mit dem Dichtungsträger 17 verbunden, der die Aufnahmenut 17a für das Dichtungselement 19 aufweist.

Schadgas-Filtermediumkörper 4 und Partikel-Filtermediumkörper 3 sind somit auf einfache Weise miteinander zu einer Einheit verbindbar und in das Gehäuse einsetzbar. Andererseits sind die beiden Filtermediumkörper 3, 4 einfach wieder zu trennen. Hierdurch ist es beispielsweise möglich, bei unterschiedlichen Standzeiten nur einen der beiden Filtermediumkörper 3, 4 durch einen neuen zu ersetzen und den anderen weiter zu verwenden. Gegenüber einer einteiligen Ausführungsform ist keine zusätzliche Dichtung erforderlich, da die Endscheibe 15 des äußeren Filtermediumkörpers 4 zur Abdichtung verwendet wird.

In den Fig. 2a bis 2c ist ein weiteres Ausführungsbeispiel dargestellt, das grundsätzlich den gleichen Aufbau wie das erste Ausführungsbeispiel aufweist, so dass insofern auf die vorstehende Beschreibung verwiesen wird. Auch bei den Fig. 2a bis 2c weist die Filtereinrichtung ein Rundfilterelement 2 auf, das einen Partikel-Filtermediumkörper 3 und einen umgreifenden Schadgas-Filtermediumkörper 4 aufweist, die einen innenliegenden Strömungsraum 11 umschließen. Die Filtermediumkörper 3, 4 werden radial von innen nach außen von dem zu reinigenden Fluid durchströmt.

Im Unterschied zu den Fig. 1a bis 1d ist bei Fig. 2a bis 2c kein Stützgitter auf der außenliegenden Wand- oder Mantelseite des Schadgas-Filtermediumkörpers 4 angeordnet. Ein Stützgitter 18 befindet sich aber im Zwischenraum zwischen den Filtermediumkörpern 3 und 4 und ist dem Partikel-Filtermediumkörper 3 zugeordnet. Zwischen dem Stützgitter 18 und der benachbarten Seitenfläche des Partikel-Filtermediumkörpers 3 kann sich eine Vlieslage befinden.

Das Stützgitter 18 kann einteilig mit einem Verbindungselement 16 ausgeführt sein, das fest mit der oberen Endscheibe 13 des Partikel-Filtermediumkörpers 3 verbunden, beispielsweise in diese eingebettet, ist. Ein Abschnitt 16a des Verbindungelementes 16 ragt zwischen den Filtermediumkörpern 3 und 4 axial in Richtung des Zwischenraumes hinein und bildet eine radiale Dichtstelle mit der oberen Endscheibe 15 des Schadgas-Filtermediumkörpers 4. Ein zweiter Abschnitt 16b ragt radial außenliegend in Axialrichtung nach unten und bildet eine weitere radiale Dichtstelle mit der oberen Endscheibe 15. Zusätzlich oder alternativ bildet die axiale Stirnseite der oberen Endscheibe 15 eine Dichtstelle mit dem radial verlaufenden Teil des Verbindungselementes 16.

Die obere Endscheibe 15 des Schadgas-Filtermediumkörpers 4 weist an der radial innenliegenden Seite einen oberen Absatz auf, an dessen Vertikalseite der Abschnitt 16a des Verbindungelementes 16 anliegt. In den Absatz in der oberen Endscheibe 15 ragt die obere Endscheibe 13 des innenliegenden Partikel-Filtermediumkörpers 3 hinein. Die obere Endscheibe 15 des Schadgas-Filtermediumkörpers 4 liegt in radialer Richtung an dem Stützgitter 18 des Partikel-Filtermediumkörpers 3 an. Das Stützgitter 18 kann in diesem Bereich geschlossen ausgeführt sein und so eine Anlagerippe für die obere Endscheibe 15 des Schadgas-Filtermediumkörpers 4 bilden, sodass eine zusätzliche Dichtstelle ausgebildet sein kann.

Der radial außenliegende Abschnitt 16b des Verbindungselementes 16 weist außerdem eine Aufnahmenut auf, in die ein Dichtungselement 19 eingesetzt ist, welches sich an einem Absatz des Gehäusetopfes 6 abstützt. Das Verbindungselement 16 bildet somit gleichzeitig den Dichtungsträger für das Dichtungselement 19.

Die untere Endscheibe 14 ist als durchgehende Scheibe ausgebildet. An der unteren Endscheibe 14 ist ein axial nach unten weisender, hohlzylindrischer Dom angeformt, der in einer ringförmigen Aufnahme am Boden des Gehäuses formschlüssig aufgenommen ist, sodass das Rundfilterelement 2 stabil gehalten ist. Die untere Endscheibe 14 ist vorzugsweise aus einem flexiblen Material, beispielsweise Polyurethanschaum hergestellt.

Das Verbindungselement 16 und das Stützgitter 18 bilden ein gemeinsames, durchgehendes Bauteil, welches im Bereich der unteren Endscheibe 12 des Partikel-Filtermediumkörpers 3 eine einteilige Fortsetzung im Abschnitt 18a findet. Dieser Abschnitt 18a des Stützgitters 18 ist scheibenförmig ausgebildet und vom Material der unteren Endscheibe 12 zumindest teilweise umschlossen, so dass eine feste Verbindung mit der unteren Endscheibe 12 besteht. Der scheibenförmige Abschnitt 18a ist zumindest abschnittsweise strömungsdicht ausgebildet und verhindert einen Fehlluftstrom des Rohfluids aus dem innenliegenden Strömungsraum 11 unter Umgehung des Partikel-Filtermediumkörpers 3 zum Schadgas-Filtermediumkörper 4.

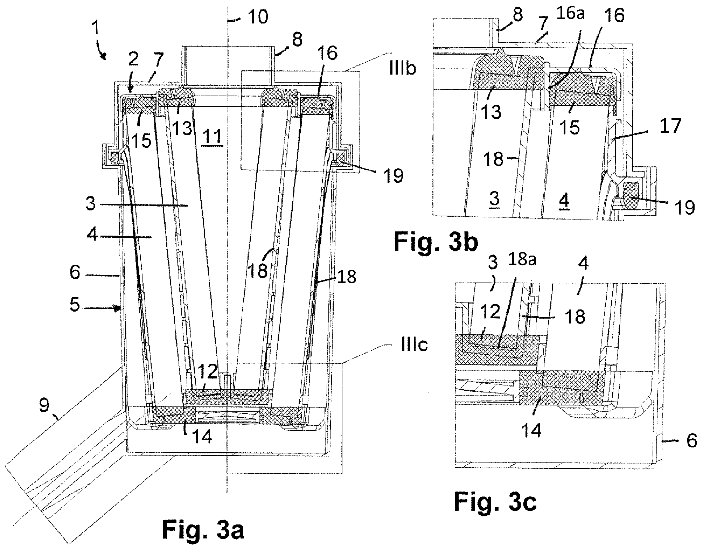

Das in den Fig. 3a bis 3c gezeigte Ausführungsbeispiel entspricht weitgehend dem Ausführungsbeispiel gemäß den Fig. 2a bis 2c. Bei Fig. 3a bis 3c besitzt jedoch die obere Endscheibe 15 des äußeren Schadgas-Filtermediumkörpers 4 eine - bezogen auf die dargestelle Schnittebene, die die Längsachse enthält - im Wesentlichen rechteckförmige Querschnittsform, ebenso wie die obere Endscheibe 13 des Partikel-Filtermediumkörpers 3, die gegenüber der Endscheibe 15 radial nach innen versetzt ist. Die obere Endscheibe 15 des äußeren Schadgas-Filtermediumkörpers 4 weist also keinen Absatz auf. Der Abschnitt 16a des Verbindungelementes 16 befindet sich zwischen den Endscheiben 13 und 15 und liegt an der radialen Außenseite der Endscheibe 13 sowie an der radialen Innenseite der Endscheibe 15 an. Weiterhin weisen in diesem Ausführungsbeispiel sowohl der innere Partikel-Filtermediumkörper 3 als auch der äußere Schadgas-Filtermediumkörper 4 ein Stützgitter 18 auf. Das radial außen liegende Stützgitter 18 des Schadgas-Filtermediumkörpers 4 weist den Dichtungsträger 17 auf. Alternativ kann der Dichtungsträger 17 auch durch einen in axialer Richtung verlängerten radial außen liegenden Abschnitt 16b des Verbindungselements 16 gebildet sein.

Die untere Endscheibe 14 des äußeren Schadgas-Filtermediumkörpers 4 ist wie beim ersten Ausführungsbeispiel im Wesentlichen eben ausgebildet. Die untere Endscheibe 14 könnte jedoch auch entsprechend der unteren Endscheibe 14 aus Fig. 2a ausgebildet sein.

## Patentansprüche

1. Rundfilterelement zur Filtration eines gasförmigen Fluids, mit einem als Hohlkörper ausgebildeten Partikel-Filtermediumkörper (3) zur Partikelfiltration des gasförmigen Fluids und mit einem separaten, als Hohlkörper ausgebildeten Schadgas-Filtermediumkörper (4) zur Schadgasfiltration, der konzentrisch zum Partikel-Filtermediumkörper (3) angeordnet ist, wobei die beiden Filtermediumkörper (3, 4) einen innenliegenden Strömungsraum (11) umschließen, wobei jeder Filtermediumkörper (3, 4) an seinen gegenüberliegenden Stirnseiten jeweils eine Endscheibe (12, 13, 14, 15) aufweist, wobei die oberen Endscheiben (13, 15) jeweils ringförmig und die unteren Endscheiben (12, 14) jeweils geschlossen ausgebildet sind, **dadurch gekennzeichnet, dass** mit der ringförmigen Endscheibe (13) des radial inneren Filtermediumkörpers (3) ein strömungsdichtes, separat ausgebildetes Verbindungselement (16) verbunden ist, das nach radial außen hinausragt und ringförmig umlaufend ausgebildet ist, und das die ringförmige Endscheibe (15) des benachbarten radial äußeren Filtermediumkörpers (4) umgreift und eine strömungsdichte Verbindung mit der Endscheibe (15) des benachbarten Filtermediumkörpers (4) herstellt.

2. Rundfilterelement nach Anspruch 1, **dadurch gekennzeichnet, dass** ein Abschnitt (16a) des Verbindungselements (16) in den Zwischenraum zwischen den beiden Filtermediumkörpern (3, 4) hineinragt und seitlich an der Endscheibe (15) des benachbarten Filtermediumkörpers (4) anliegt.

3. Rundfilterelement nach Anspruch 1 oder 2, **dadurch gekennzeichnet, dass** ein Abschnitt (16b) des Verbindungselements (16) auf der dem haltenden Filtermediumkörper (3) abgewandten Seite seitlich an der Endscheibe (15) des benachbarten Filtermediumkörpers (4) anliegt.

4. Rundfilterelement nach einem der Ansprüche 1 bis 3, **dadurch gekennzeichnet, dass** ein Abschnitt (16b) des Verbindungselements (16) Träger eines Dichtungselements (19) zur Abstützung an einem Gehäuseteil (6) ist.

5. Rundfilterelement nach einem der Ansprüche 1 bis 4, **dadurch gekennzeichnet, dass** das Verbindungselement (16) mit einem Stützgitter (18) verbunden ist, das an einer Wandseite eines Filtermediumkörpers (4) angeordnet ist.

6. Rundfilterelement nach einem der Ansprüche 1 bis 5, **dadurch gekennzeichnet, dass** zumindest ein Filtermediumkörper (3, 4), vorzugsweise beide Filtermediumkörper (3, 4) als Filterbalg ausgebildet sind.

7. Rundfilterelement nach einem der Ansprüche 1 bis 6, **dadurch gekennzeichnet, dass** eine Medienlage, insbesondere eine Vlieslage, an der Wandseite eines Filtermediumkörpers (3, 4) angeordnet ist.

8. Rundfilterelement nach Anspruch 7, **dadurch gekennzeichnet, dass** die Medienlage zwischen den beiden Filtermediumkörpern (3, 4) angeordnet ist.

9. Rundfilterelement nach Anspruch 7 oder 8, **dadurch gekennzeichnet, dass** die Medienlage an der Außenseite eines Filtermediumkörpers (4) angeordnet ist.

10. Rundfilterelement nach einem der vorangehenden Ansprüche, **dadurch gekennzeichnet, dass** mindestens einer der Filtermediumkörper (3, 4) aus mindestens zwei Teilkörpern besteht, welche in axialer Richtung aneinandergefügt sind.

11. Filtereinrichtung mit einem Rundfilterelement (2) nach einem der Ansprüche 1 bis 10 und mit einem Filtergehäuse (5) zur Aufnahme des Rundfilterelements (2).

12. Verwendung einer Filtereinrichtung nach Anspruch 1 in oder an einer Brennstoffzelle.

## Claims

1. A round filter element for filtering a gaseous fluid, with a particle filter medium body (3) designed as a hollow body for particle filtration of the gaseous fluid and with a separate harmful gas filter medium body (4) designed as a hollow body for harmful gas filtration, which is disposed concentrically to the particle filter medium body (3), wherein the two filter medium bodies (3, 4) enclose an internal flow chamber (11), wherein each filter medium body (3, 4) features an end disc (12, 13, 14, 15) on each of its opposite front faces, wherein the upper end discs (13, 15) are each annular and the lower end discs (12, 14) are each closed, **characterized in that** a flow-tight, separately formed connecting element (16) is connected to the annular end disc (13) of the radially inner filter medium body (3), which connecting element projects radially outward and is annularly circumferential, and which surrounds the annular end disc (15) of the adjacent radially outer filter medium body (4) and establishes a flow-tight connection with the end disc (15) of the adjacent filter medium body (4).

2. The round filter element according to claim 1, **characterized in that** a section (16a) of the connecting element (16) protrudes into the intermediate space between the two filter medium bodies (3, 4) and rests laterally against the end disc (15) of the adjacent filter medium body (4).

3. The round filter element according to claim 1 or 2, **characterized in that** a section (16b) of the connecting element (16) on the side facing away from the holding filter medium body (3) rests laterally against the end disc (15) of the adjacent filter medium body (4).

4. The round filter element according to one of the claims 1 to 3, **characterized in that** a section (16b) of the connecting element (16) is the carrier of a sealing element (19) for supporting a housing part (6).

5. The round filter element according to one of the claims 1 to 4, **characterized in that** the connecting element (16) is connected to a support grid (18) arranged on a wall side of a filter medium body (4).

6. The round filter element according to one of the claims 1 to 5, **characterized in that** at least one filter medium body (3, 4), preferably both filter medium bodies (3, 4), are designed as filter bellows.

7. The round filter element according to one of the claims 1 to 6, **characterized in that** a media layer, in particular a non-woven layer, is arranged on the wall side of a filter medium body (3, 4).

8. The round filter element according to claim 7, **characterized in that** the media layer is disposed between the two filter medium bodies (3, 4).

9. The round filter element according to claim 7 or 8, **characterized in that** the media layer is disposed on the exterior side of a filter medium body (4).

10. The round filter element according to one of the preceding claims, **characterized in that** at least one of the filter medium bodies (3, 4) consists of at least two partial bodies which are joined together in the axial direction.

11. A filter device with a round filter element (2) according to one of the claims 1 to 10 and with a filter housing (5) for receiving the round filter element (2).

12. A use of a filter device according to claim 11 in or on a fuel cell.

## Revendications

1. Élément filtrant rond destiné à la filtration d'un fluide gazeux, ayant un corps de milieu filtrant les particules (3) conçu comme un corps creux pour la filtration des particules du fluide gazeux et ayant un corps de milieu filtrant les gaz toxiques (4) séparé, conçu comme un corps creux pour la filtration des gaz toxiques, qui est disposé de manière concentrique par rapport au corps de milieu filtrant les particules (3), les deux corps de milieu filtrant (3, 4) entourant un espace d'écoulement disposé à l'intérieur (11), chaque corps de milieu filtrant (3, 4) présentant sur ses faces frontales opposées respectivement un disque d'extrémité (12, 13, 14, 15), les disques d'extrémité supérieurs (13, 15) étant chacun de forme annulaire et les disques d'extrémité inférieurs (12, 14) étant chacun fermé, **caractérisé en ce qu'**un élément de raccordement (16) étanche à l'écoulement et de conception séparée est relié au disque d'extrémité annulaire (13) du corps de milieu filtrant radialement intérieur (3), lequel élément de raccordement fait saillie vers l'extérieur dans le sens radial et est de conception annulaire périphérique, et qui entoure le disque d'extrémité annulaire (15) du corps de milieu filtrant radialement extérieur adjacent (4) et établit un raccordement étanche aux flux avec le disque d'extrémité (15) du corps de milieu filtrant adjacent (4).

2. Élément filtrant rond selon la revendication 1, **caractérisé en ce qu'**une section (16a) de l'élément de raccordement (16) fait saillie dans l'espace intermédiaire entre les deux corps de milieu filtrant (3, 4) et repose latéralement contre le disque d'extrémité (15) du corps de milieu filtrant adjacent (4).

3. Élément filtrant circulaire selon la revendication 1 ou 2, **caractérisé en ce qu'**une section (16b) de l'élément de raccordement (16) sur le côté opposé au corps de média filtrant de retenue (3) repose latéralement contre le disque d'extrémité (15) du corps de milieu filtrant adjacent (4).

4. Élément filtrant circulaire selon l'une quelconque des revendications 1 à 3, **caractérisé en ce qu'**une section (16b) de l'élément de raccordement (16) sert de support à un élément d'étanchéité (19) destiné à s'appuyer sur une partie du boîtier (6).

5. Élément filtrant rond selon l'une quelconque des revendications 1 à 4, **caractérisé en ce que** l'élément de raccordement (16) est relié à une grille de support (18) qui est disposée sur une paroi d'un corps de milieu filtrant (4).

6. Élément filtrant rond selon l'une quelconque des revendications 1 à 5, **caractérisé en ce qu'**au moins un corps de milieu filtrant (3, 4), de préférence les deux corps de milieu filtrant (3, 4), sont conçus comme des soufflets de filtre.

7. Élément filtrant rond selon l'une quelconque des revendications 1 à 6, **caractérisé en ce qu'**une couche de média, en particulier une couche de non-tissé, est disposée sur la paroi d'un corps de milieu filtrant (3, 4).

8. Élément filtrant rond selon la revendication 7, **caractérisé en ce que** la couche de média est disposée entre les deux corps de milieu filtrant (3, 4).

9. Élément filtrant rond selon la revendication 7 ou 8, **caractérisé en ce que** la couche de média est disposée sur la face extérieure du corps de milieu filtrant (4).

10. Élément filtrant rond selon l'une quelconque des revendications précédentes, **caractérisé en ce qu'**au moins l'un des corps de milieu filtrant (3, 4) est constitué d'au moins deux corps partiels qui sont assemblés dans le sens axial.

11. Dispositif de filtration avec un élément filtrant rond (2) selon l'une quelconque des revendications 1 à 10 et avec un boîtier de filtre (5) servant à réceptionner l'élément filtrant rond (2).

12. Utilisation d'un dispositif de filtration selon la revendication 11 dans ou sur une pile à combustible.
